# EUROPEAN PATENT APPLICATION

(11) **EP 2 020 809 A1**
(43) Date of publication of application: **04.02.2009**
(21) Application number: 07113642.8
(22) Date of filing: 01.08.2007
(51) Int. Cl.: H04M 1/247, H04M 1/725, H04M 1/04

(54) **Multimedia device for integrating a mobile phone**

(71) Applicant: Giga-Byte Communications, Inc., Hsin-Tien Taipei County (TW); Giga-Byte Technology Co., Ltd., Taipei (TW)
(72) Inventor: Lo, Kuo-Jung, Hsin-Tien (TW)
(74) Representative: Cabinet Plasseraud

(57) **Abstract**

A multimedia device for integrating a mobile phone, the expansion system includes an expansion module and a mobile phone. The expansion module includes a memory unit, a processing unit, a first communication interface, and a first display unit. The processing unit is for performing the expansion software applications in the expansion module. The memory unit electrically connects to the process unit and is used for storing the expansion software applications. The process unit accesses the data of the mobile phone through the first communication interface. The first display unit electrically connects to the process unit. The mobile phone further includes a second display unit. When the mobile phone connects to the expansion module, the first display unit will display the functional list by the expansion module and the second display module will display the performance of the function.

## Description

### BACKGROUND

### Field of the Invention

The invention relates to a multimedia device for integrating a mobile phone and more particularly to an expansion module which provides mobile phone added functions.

### Related Art

Due to the high speed development of micro processor, mobile phone has become from a simple communication tool to a multifunctional portable electronic device. In order to integrate the functions of different electronics products, many manufactures have combined the mobile phone with the functions of those electronics products. For example, integrating a global positioning system (GPS) into a mobile phone allow a user to search for a nearby scenic spot or an amusement part anytime he wants.

However, not everyone is going to use every function or modules which are integrated in the mobile phone, or some functions are not frequently to be used. For example, the GPS may only be used during the driving, which may be inferred that many functions in a mobile phone may well only be employed in certain occasions.

From another prospective of view, take the dock used for a laptop as an example. In order to give the consumer more convenience to carry a laptop, manufacturers have designed an expansion dock to include different kinds of ports. So a user doesn't have to carry the dock when he is going out and only carries a laptop with him, and when he feels the needs when he comes back, he can just connect to the dock no matter what types of ports the device may have. For instance, a typical expansion dock may include USB ports or IEEE 1394 ports. However, the expansion dock only provides laptop additional connecting ports. It can not add additional functions to the laptop.

### SUMMARY

According to the foregoing problems, the purpose of the invention is to provide a multimedia device for integrating a mobile phone.

In order to achieve the forgoing purposes, the expansion system includes an expansion module and a mobile phone. The expansion module has several of expansion software applications, and further includes a memory unit, a processing unit, a first communication interface, and a first display unit. The memory unit is used for storing the expansion software applications. The processing unit is electrically connecting to the memory unit for performing the expansion software applications, and is able to access the mobile phone through a first communication interface. The first display unit is electrically connecting to the process unit for displaying a first image of the selected expansion software application. The mobile phone is electrically connecting to the expansion module through the first communication interface, and further includes a second display unit which is used for display a second image of the selected expansion software application.

According to the embodiment of the invention, the above described multimedia device can provide mobile phone the expansion software applications, which can expand the functions of the mobile phone so can supplement the functions of the mobile phone. To perform the expansion software applications, the only thing you need to do is connect the expansion module to the mobile phone. Except there is a first display unit in the expansion module for displaying the functional list of the expansion software applications, the second display unit in the mobile phone can be further used for displaying the performing contents of the expansion software application.

### BRIEF DESCRIPTION OF THE DRAWINGS

The present invention will become more fully understood from the detailed description given below, which is for illustration only and thus is not limitative of the present invention, wherein:
FIG.1 is a block diagram showing the structure of the invention;
FIG.2a is a front view diagram of a preferred embodiment of the invention;
FIG.2b is a side view diagram of a preferred embodiment of the invention;
FIG.3 is a diagram showing the combination of the invention and the mobile phone;
FIG.4 is a diagram showing the invention executing the GPS;
FIG.5 is a diagram of another preferred embodiment of the invention;
FIG.6a is a diagram of another preferred embodiment of the invention; and
FIG.6b is a diagram of another preferred embodiment of the invention.

### DETAILED DESCRIPTION

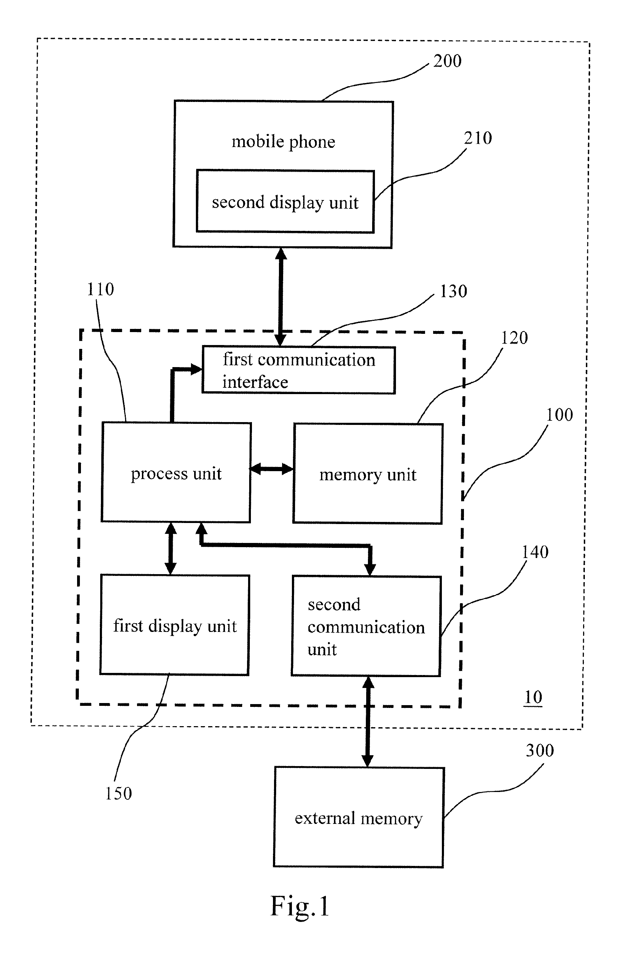

FIG.1 is a block diagram showing the structure of the invention. According to the invention, the multimedia device 10 for integrating the mobile phone includes a expansion module 100 and a mobile phone 200. The expansion module 100 is used for connecting to the mobile phone 200, and stored with a plurality of expansion software applications to provide mobile phone the expansion software applications. The expansion module 100 includes a process unit 110, a memory unit 120, a first communication interface 130, a second communication unit 140, a first display unit 150, and a hot key 160. The mobile phone 200 includes a second display unit 210 for displaying the result of performing the expansion software applications in the expansion module 100.

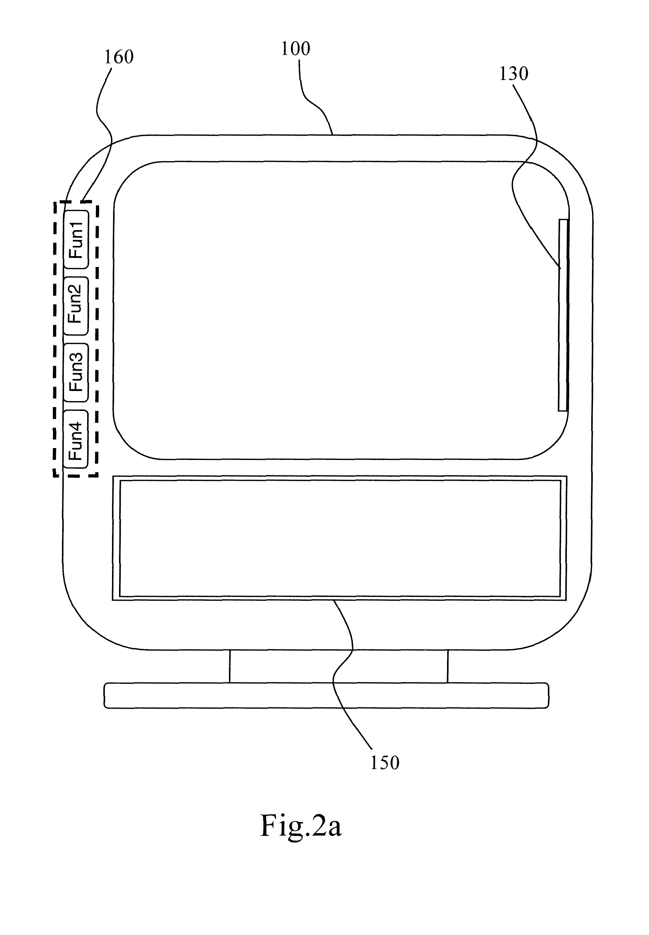

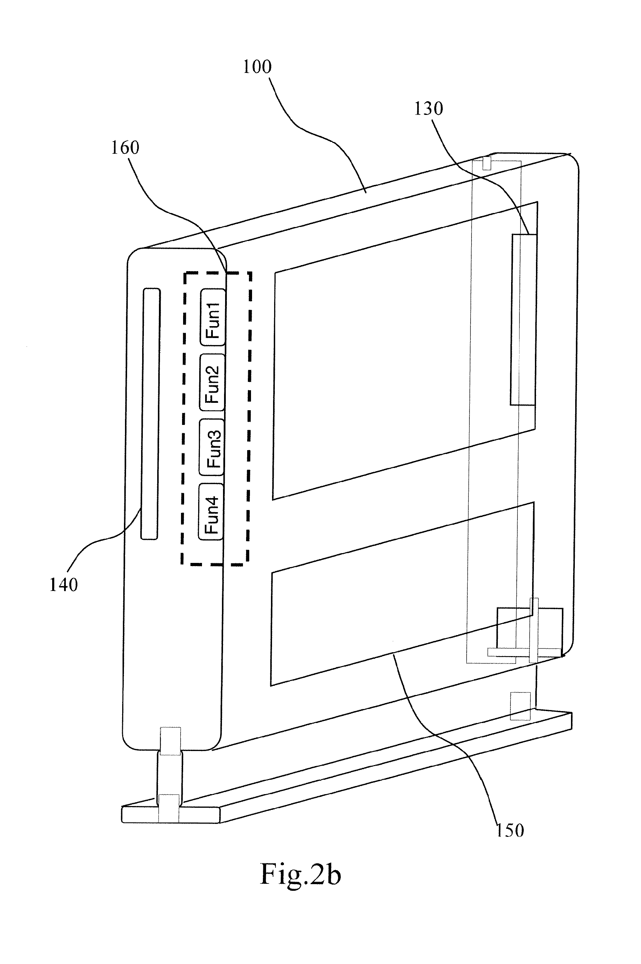

FIGs.2a and 2b are respectively a front view and a side view of a preferred embodiment of the invention. The process unit 110 is used for accessing the expansion software application in the expansion module 100 and sending the result to the second display unit 210 in the mobile phone 200 through the first communication interface 130. The memory unit 120 is electrically connecting to the process unit 110, and the memory unit 120 is used for storing the expansion software application which is to be performed by the expansion module 100. The process unit 110 is used for accessing the data in the mobile phone through the first communication interface 130. The first communication interface 130 is set up based on the data transmission interface of the mobile phone 200.

If a wire connection is applied, the first communication interface 130 can be a USB, or an IEEE 1394 interface. On the other hand, if a wireless connection is applied, the first communication interface 130 can be achieved by a Bluetooth, ultra wide-band (UWB) or a wireless network technology. In this embodiment, a wire connection is used for illustration.

The second communication interface 140 is used for transmitting the stored data in the external memory 300. The second communication interface 140 can be but not limited to the USB interface or an IEEE 1394 interface. The process unit 110 can communicate with the memory unit 120 such as a micro driver, a memory card or a flash jet through the second communication interface 140.

The memory card can be a compact flash memory card, a memory stick memory card, a multi media memory card, a secure digital memory card, a smart media memory card, or an eXtreme digital picture memory card. When a manufacturer or a third party developer has published an updated expansion software application or software, a user can update the software application of the expansion module 100 through the external memory 300.

The first display unit 150 is electrically connecting to the process unit 110. When the mobile phone 200 is connecting to the expansion module 100, the first display unit 150 will have an On Screen Display (OSD) of the provided expansion software application of the expansion module 100, and the second display unit 210 will show the performing images of the expansion software application. For the convenience of describing the embodiment, here a touch panel will be used as an illustrative example of the first display unit 150. The hot key 160 is set up based on the often used expansion software application, which allows user to fast execute the stored expansion software application in the expansion module 100. The expansion software application which corresponds to the hot key 160 can be set up by the user himself, and the number of the hot keys 160 is depending on the design of the manufacturers, which is not limited to the amounts shown in the figures.

For example, the expansion software application can be a GPS software, an album software, a media player, a video player or all kinds of the software. If the expansion module 100 has four hot keys, which are first hot key 161, second hot key 162, third hot key 163 and fourth hot key 164 and are respectively set up to correspond to the GPS, the album, the media player and the video player, then to execute the function, user only need to do is to press the corresponding hot key.

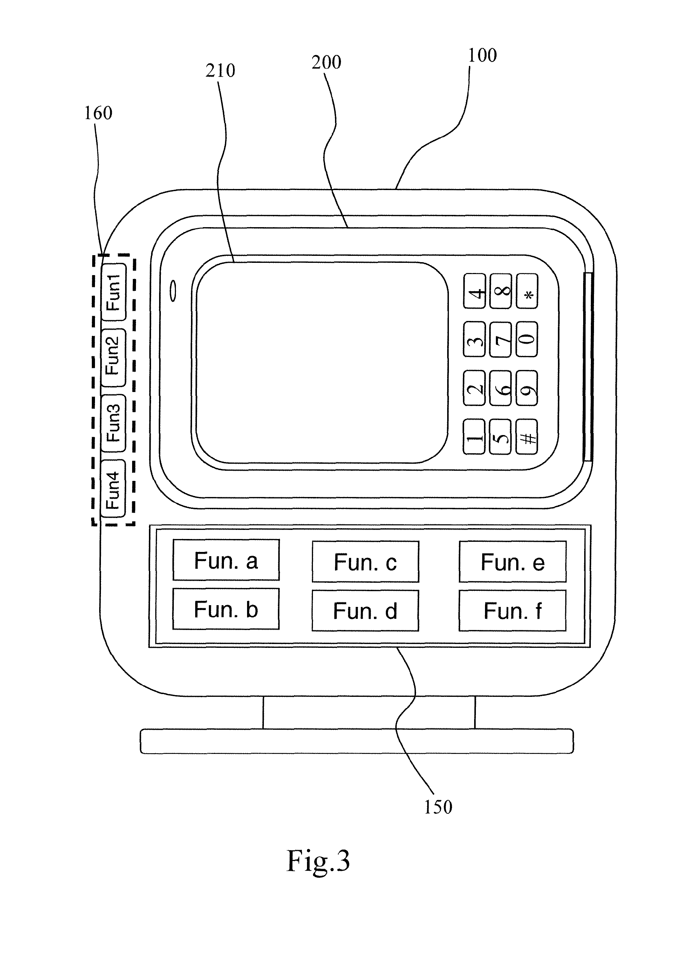

FIG.3 is a diagram showing the combination of the invention and the mobile phone. It should be noted that when a user executes an expansion software application of the expansion module 100, the first display unit 150 in the expansion module 100 will display the functional list of the expansion software application. At this time, the second display unit 210 will be used for displaying the results of performing the function.

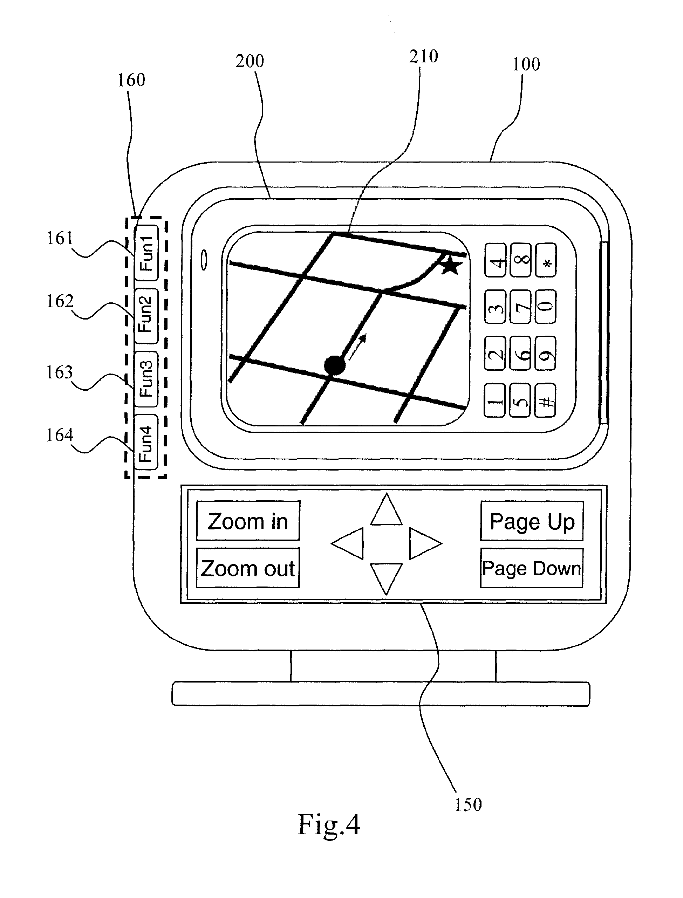

For example, when a user presses the first hot key 161 which corresponds to the GPS, the first display unit 150 and the second display unit 210 will respectively display the map data and the detailed functions. FIG.4 is a diagram showing the invention executing the GPS. For example, the first display unit 150 in the expansion module 100 can show the detailed functions of the GPS such as zooming in, zooming out, scrolling up, scrolling down, shifting to the right, shifting to the left and so on.

On the other hand, the second display unit 210 will be used for displaying the map data of the GPS. And when a user presses a functional key on the first display unit 150, the expansion module 100 will base on the received order to display the execution result on the second display unit 210. For example, when a user inputs the destination through the first display unit 150, the process unit 110 will send the result to the second display unit 210 to display the route thereon.

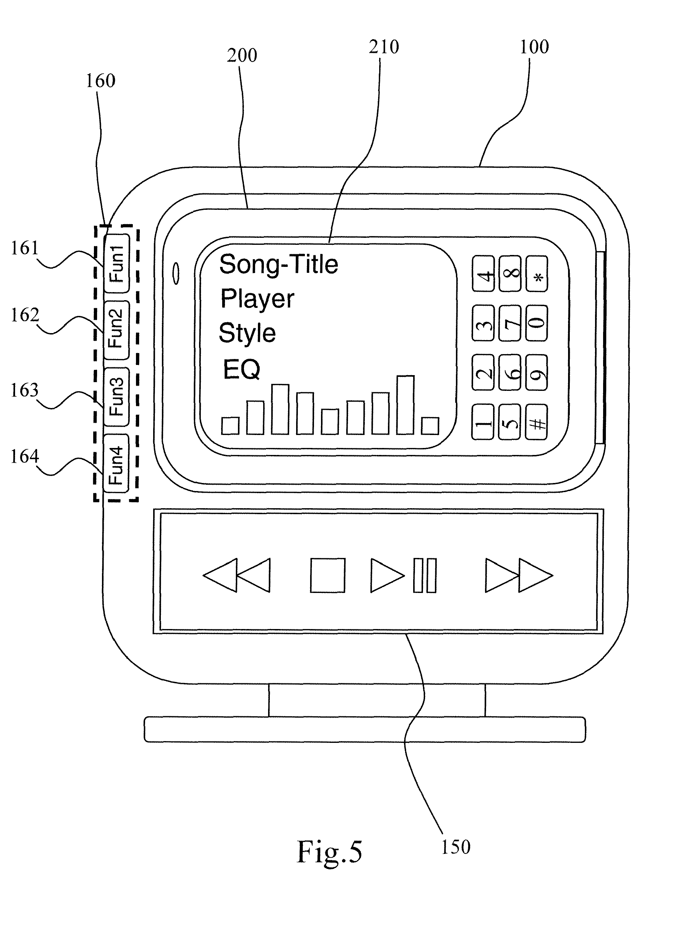

Or, if the user wants to switch from the GPS to the media player, he only needs to press the third hot key 163 which is corresponding to the media player application. FIG.5 is a diagram showing the invention executing the media player. Similarly, the first display unit 150 will display the functional key necessary for executing the media player, and the second display unit 210 will display the related information of the song which is playing. For example, the first display unit 150 will display some functional keys such as reverse, forward, pause, play and stop for the media player application, and the second display unit 210 will show the title of the song, the singer, the style or other related information such as equalizer.

Accordingly, the expansion module 100 of the mobile phone 200, which is used for provide the mobile phone 200 added expansion software application may allow the mobile phone 200 to increase the functions without increasing the size, and as to the execution of the expansion software applications, only connecting the expansion module 100 to the mobile phone 200 is needed. Thus, not only the mobile phone 200 can be thinner, lighter and smaller but also a user can have the functions desired by using the expansion module 100.

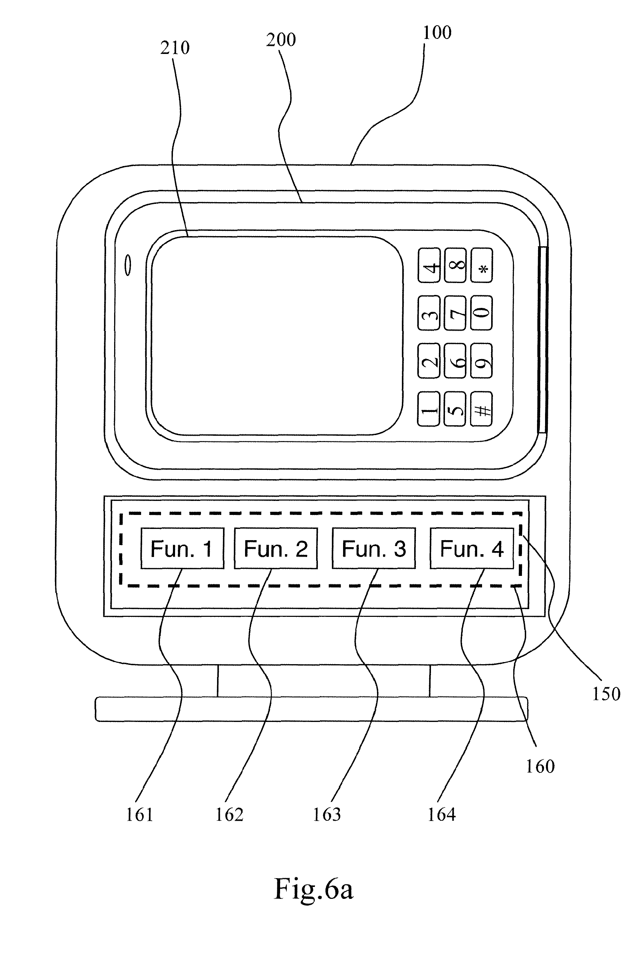

FIG.6a shows another preferred embodiment of the invention. The expansion module 100 includes a process unit 110, a memory unit 120, a first communication interface 130, a second communication interface 140 and a first display unit 150. In this embodiment, the first display unit 150 is a touch panel, where the first display unit 150 combines with the hot key 160 and users can directly switch between expansion software applications through the first display unit150. The displayed four hot keys in the first display unit 150, the first hot key 161, the second hot key 162, the third hot key 163 and the fourth hot key 164 can be respectively set up by the user as the GPS, the album, the media player and the video player.

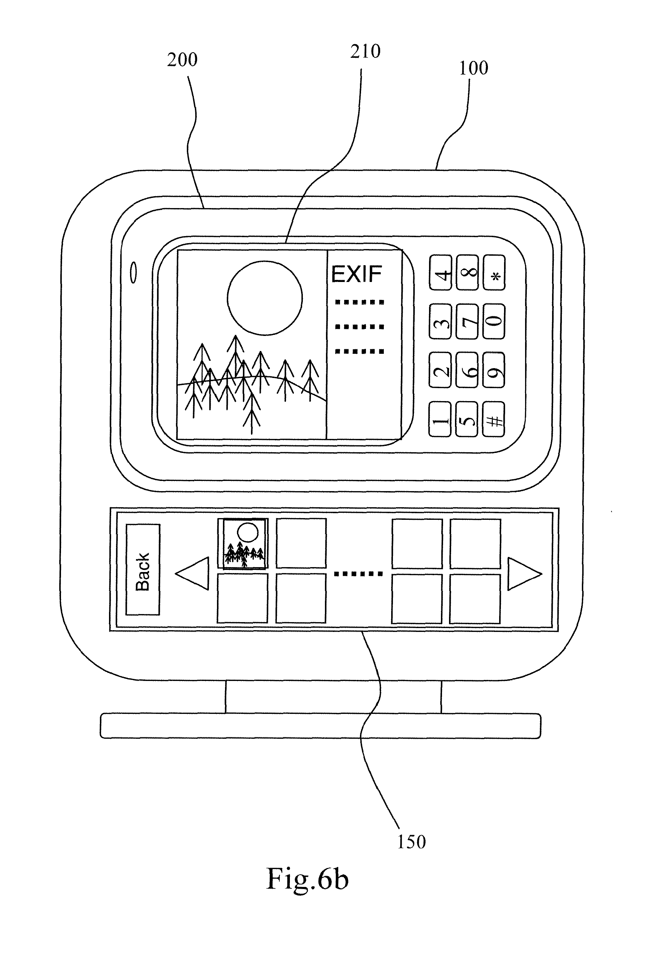

FIG.6b is a diagram of another preferred embodiment of the invention showing the album. When a user touches the second hot key 162 in FIG.6a, which is corresponding to the album, the first display unit 150 will switch to the microcosm mode for the album, for users to select. If the user selects one of the images, the second display unit 210 will show the image and the related information such as the image is exchangeable image file format (EXIF). If the user wants to switch to another expansion software application, he just needs to touch "Back" on the first display unit 150, which will allow him to go back to the hot key display screen in FIG.6a. Of course, switching technique is not limited to the above technology.

In summary, the multimedia device for integrating a mobile phone can expand a mobile phone's functions, so can supplement the original functions of a mobile phone. In this invention, except the first display unit 150 in the expansion module 100 is used to display the functional list of the expansion software application, the second display unit 210 of the mobile phone is further used to display the execution contents of the expansion software application.

While the illustrative embodiments of the invention have been set forth for the purpose of disclosure, modifications of the disclosed embodiments of the invention as well as other embodiments thereof may occur to those skilled in the art. Accordingly, the appended claims are intended to cover all embodiments, which do not depart from the spirit and scope of the invention.

## Claims

1. A multimedia device for integrating a mobile phone, the expansion system comprising:
a expansion module which provides a plurality of expansion software applications, the expansion module further including:
a memory unit for storing the expansion software applications;
a process unit which electrically connects to the memory unit for performing the expansion software applications in the expansion module;
a first communication interface for the process unit to access a mobile phone; and
a first display module which electrically connects to the process unit for displaying a first image of a selected expansion software application; and
a mobile phone which electrically connects to the expansion module through the first communication interface, the mobile phone further including:
a second display unit for displaying a second image of the selected expansion software application.

2. The multimedia device of claim 1, wherein the expansion module further includes a second communication module for communicating a stored data in an external memory.

3. The multimedia device of claim 2, wherein the second communication module is a USB interface or an IEEE 1394 interface.

4. The multimedia device of claim 2, wherein the external memory is a micro driver, a memory card or a flash jet.

5. The multimedia device of claim 4, wherein the memory card is selected from the group consisting of a compact flash memory card, a memory stick memory card, a multi media memory card, a secure digital memory card, a smart media memory card, and an eXtreme digital picture memory card.

6. The multimedia device of claim 1, wherein the expansion device further including a plurality of hot keys, which correspond to the expansion software applications for executing selected expansion software applications.

7. The multimedia device of claim 1, wherein the expansion software applications include a GPS, a album, a media player, a TV player and a video player.

8. The multimedia device of claim 1, wherein when the mobile phone communicates with the expansion module, the first image is used for displaying a functional list of a selected expansion software application, and the second image is used for displaying the contents of the selected expansion software application.
